# EUROPEAN PATENT SPECIFICATION

(11) **EP 0 497 396 B1**
(45) Date of publication and mention of the grant of the patent: **05.06.1996**
(21) Application number: 92200083.1
(22) Date of filing: 14.01.1992
(51) Int. Cl.: A01B 33/08

(54) **A soil cultivating machine**
Bodenbearbeitungsmaschine
Machine de labourage

(30) Priority: 16.01.1991 NL 9100067
(43) Date of publication of application: 05.08.1992
(73) Proprietor: C. van der Lely N.V., NL-3155 PD Maasland (NL)
(72) Inventor: Van der Lely, Cornelis, Zug (CH)
(74) Representative: Mulder, Herman

(56) References cited:
- EP-A- 0 269 183
- GB-A- 2 035 026
- GB-A- 2 136 261
- NL-A- 8 701 604

## Description

The present invention relates to a soil cultivating machine having a frame portion and soil working members supported therein and drivable about upwardly directed shafts, each soil working member having on its upwardly directed shaft, a sleeve of a holder adapted to receive one or a plurality of soil working elements, the sleeve being of a cylindrical shape, the cylindrical portion of the sleeve being adapted to bear on a cylindrical portion of the shaft.

Such a soil cultivating machine is known from GB-A-2 035 026.

In this document the soil working members include a holder for one or a plurality of soil working elements, such as tines or knives. This holder is provided with a sleeve which is fitted with splines. The sleeve can be accommodated around a drivable shaft which is bearing-supported in the frame portion. At that end of the shaft of a soil working member that is located in the frame portion, a gear wheel may be accommodated for driving the soil working member. By mounting the holder on the shaft by means of splines, it is possible to facilitate mounting and demounting. In operation, however, the soil working members are exposed to enormous forces and wear occurs in the splines connection, due to which the holder may become detached when the machine is operated in a soil in which there are a lot of stones.

The invention has for its object to significantly reduce the risk of detaching and to provide a more solid construction of the sleeve-to-holder connection for one or a plurality of soil working elements to the shaft. According to the invention, the sleeve is without splines at its upper end and therebelow said upper end is provided with splines, the sleeve at its upper end being adapted to bear directly on a ball bearing, by means of which the shaft is supported in the lower wall of the frame portion and clampable against said ball bearing. In other words, at its upper end the sleeve has a smooth cylindrical portion, whereas splines are provided below this smooth cylindrical portion, the smooth cylindrical portion of the sleeve bearing on a smooth cylindrical portion of the shaft. Applying such smooth, cylindrical portions of the shaft can be done with great precision, so that the holder can be accommodated on the shaft to an improved extent By making the length of the sleeve longer than hitherto customary, the sleeve can bear at the upper end directly or substantially directly on the ball bearing, by means of which the shaft is supported in the lower wall of the frame portion. Also this measure results in an improved mounting of the soil working member in the frame portion.

In a specific embodiment in accordance with the invention, that portion of the sleeve that is accommodated in the housing of the bearing, via which the shaft is supported in the lower wall of the frame portion, is in the shape of a collar. This, too, renders it possible to increase the length of the sleeve. According to the invention, the sleeve may have a length which is at least approximately twice as large as the inside diameter of the sleeve. A long sleeve, particularly when having a smooth upper end, results in a larger bearing surface between shaft and holder, which achieves an improved connection of the holder about the shaft.

In accordance with a further feature of the invention, an oil seal may be provided around a shaft, at least a portion of the holder for one or a plurality of soil working elements being located between this oil seal and the shaft.

For a better understanding of the invention and to show how the same may be carried into effect, reference will now be made, by way of example, to some embodiments shown in the accompanying drawings, in which:

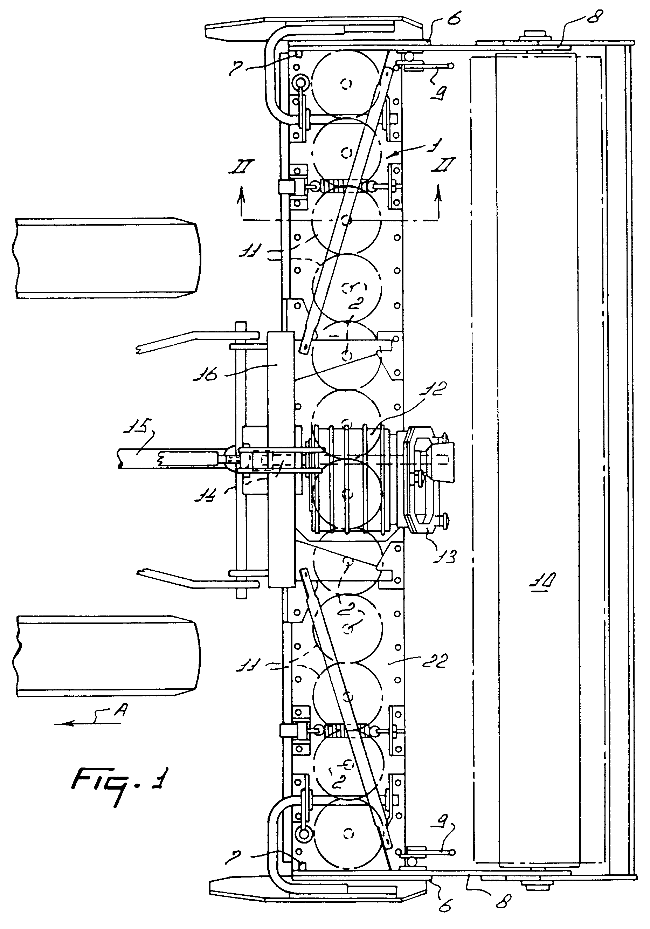

Figure 1 is a plan view of a soil cultivating machine comprising a construction in accordance with the invention;
Figure 2 shows, to an enlarged scale, a cross-sectional view taken on the line II - II in Figure 1, and
Figure 3 is, to a still further enlarged scale, a detail of the cross-sectional view shown in Figure 2.

The implement shown in the drawings relates to a soil cultivating machine, more particularly one for the preparation of a seed bed. The machine includes a hollow frame portion 1 which extends transversely to the direction of operative travel A. Inside the box-like frame portion 1 there are supported at equal interspaces of preferably 25 cms the upwardly directed, preferably vertical shafts 2 of soil working members 3. That end of each shaft 2 that projects from the bottom side of the frame portion 1 is provided with a holder 4, which extends at least substantially horizontally and at its end is fitted with downwardly extending soil working elements 5 in the form of tines. The ends of the frame portion 1 are closed by means of plates 6, which extend upwardly and at least substantially parallel to a vertical plane in the direction of operative travel A of the machine. Near its leading side, each of the plates is provided with a bolt 7 which extends transversely to the direction of operative travel A, the arrangement being such that the longitudinal centre lines of the respective bolts 7 are in alignment. Around each of the bolts 7 there is arranged freely pivotably an arm 8 which extends rearwardly along the inner side of a plate 6. Each arm 8 can be adjusted to and locked in a plurality of positions by means of an adjusting device which is located near the rear side of the frame portion 1 and which, in this embodiment, is constituted by a threaded spindle 9. Between the ends of the arms 8 there is arranged freely rotatably a roller 10 in the form of a packer roller. The roller 10 includes a central cylindrical carrier, whose ends are supported freely pivotably in the arms 8 by means of shafts and bearings accommodated in bearing housings.

Inside the box-like frame portion 1, each shaft 2 of a soil working member 3 is fitted with a cylindrical gear wheel 11, i.e. one having straight teeth, the arrangement being such that the gear wheels 11 on the shafts 2 of adjacent soil working members are in driving connection with each other. Near the centre of the machine, the shaft 2 of the soil working member is extended upwardly and reaches to into a gear box 12, inside which the extended portion is in connection via a bevel gear transmission with a shaft which extends in the direction of operative travel A and which via a speed variator 13 located at the rear side of the gear box 12 is in driving connection with a superjacent shaft 14 which, seen in plan view, is located over the midway point of the box-like frame portion 1, extends in the direction of operative travel A and projects at both leading side and the trailing side beyond the gear box 12. The shaft 14 can be coupled to the power take-off shafts of a tractor via an intermediate shaft 15. The leading side of the frame portion 1 is provided with a trestle 16 which has a three-point connection for coupling to the three-point lifting hitch of a tractor.

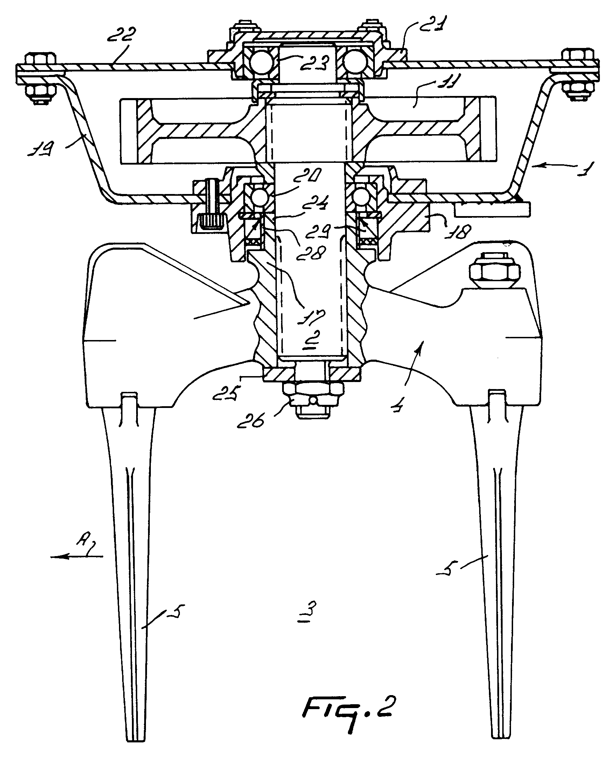

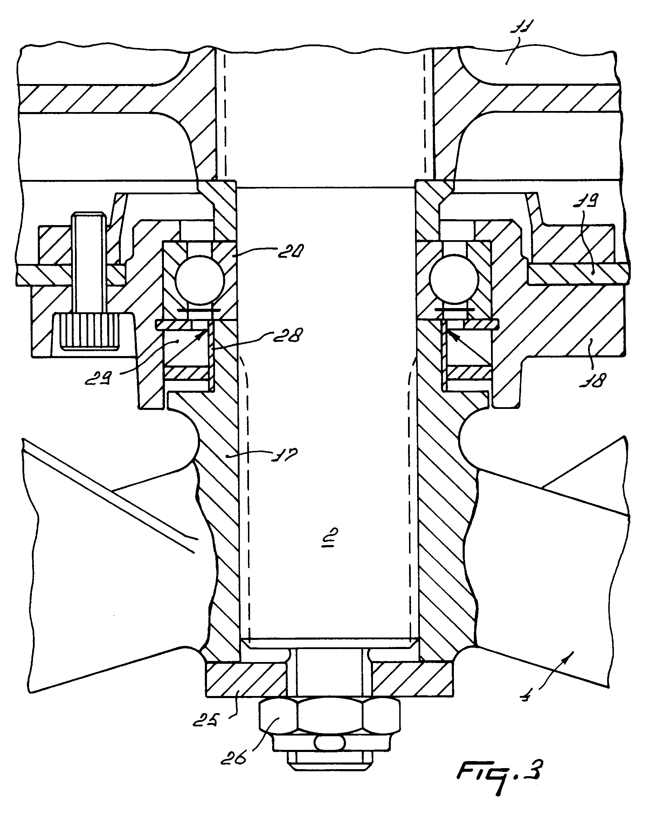

The holder 4 for the soil working elements 5 is provided with a sleeve 17, with the aid of which the holder can be accommodated around the lower end of the shaft 2. At its upper end, this sleeve 17 is cylindrical in shape without splines, i.e. it is of a smooth cylindrical design, whereas below this smooth cylindrical portion the sleeve 17 is provided with splines. In the embodiment shown in Figures 2 and 3, the shaft 2 is provided with splines at its lower end and thereabove it is provided with a cylindrical portion without splines, i.e. a smooth cylindrical portion, the arrangement being such that the smooth cylindrical portion of the sleeve is contiguous to a smooth cylindrical portion of the shaft 2 and that the splines in the sleeve 17 engage the splines on the shaft 2. The shaft 2 is supported with the aid of a ball bearing 20 in a housing 18 fastened to the lower wall 19 of the frame portion 1. The upper end of the shaft 2 is supported by means of a ball bearing 23 in a housing 21 fastened to the upper wall 22 of the frame portion 1. The sleeve 17 is extended by means of a collar-shaped portion 24 which projects into the housing 18. Thus, the sleeve 17 has a length which is at least approximately twice as large as the diameter of the sleeve. At its upper end, the sleeve 17 bears directly against the ball bearing 20 and can be clamped thereto with the aid of the annular washer 25 and the nut 26 (Figure 2).

A ground bushing 28 is arranged around the collar-shaped portion 24 of the sleeve 17, while an oil seal 29 is present between this ground bushing 28 and the housing 18.

In the embodiment shown in Figure 2, the shaft 2 has in the region of the gear wheel 11 a larger diameter than in the region in which the holder 4 is accommodated about the shaft 2. The gear wheel 11 is accommodated around this widened shaft portion with the aid of splines.

## Claims

1. A soil cultivating machine having a frame portion (1) and soil working members (3) supported therein and drivable about upwardly directed shafts (2), each soil working member (3) having on its upwardly directed shaft (2), a sleeve (17) of a holder (4) adapted to receive one or a plurality of soil working elements (5), the sleeve being of a cylindrical shape, the cylindrical portion of the sleeve (17) being adapted to bear on a cylindrical portion of the shaft (2), characterized in that the sleeve (17) is without splines at its upper end and therebelow said upper end is provided with splines, the sleeve (17) at its upper end being adapted to bear directly on a ball bearing (20), by means of which the shaft (2) is supported in the lower wall (19) of the frame portion (1) and clampable against said ball bearing (20).

2. A soil cultivating machine as claimed in claim 1, characterized in that that portion of the sleeve (17) that is accommodated in the housing (18) of the bearing (20), by means of which the shaft (2) is supported in the lower wall (19) of the frame portion (1), is in the shape of a collar.

3. A soil cultivating machine as claimed in claim 1 or 2, characterized in that the sleeve (17) has a length which is at least approximately twice as large as the inside diameter of the sleeve (17).

4. A soil cultivating machine as claimed in any one of the preceding claims, characterized in that an oil seal (29) is provided around a shaft (2), and that at least a portion of the holder (4) for one or a plurality of soil working elements (5) is located between this oil seal (29) and the shaft (2).

## Patentansprüche

1. Bodenbearbeitungsmaschine mit einem Gestellteil (1) und in ihm abgestützten Bodenbearbeitungsgliedern (3), die mittels aufwärts gerichteter Wellen (2) anzutreiben sind, wobei an der aufwärts gerichteten Welle (2) jedes Bodenbearbeitungsgliedes (3) eine Buchse (17) eines Halters (4) angeordnet ist, in welchem ein oder mehrere Bodenbearbeitungselemente (5) zu haltern sind, und wobei die Buchse (17) zylinderförmig ist und der zylindrische Teil der Buchse (17) von einem zylindrischen Teil der Welle (2) getragen ist,
dadurch gekennzeichnet, daß die Buchse (17) an ihrem oberen Ende ohne Nuten ausgebildet ist, unterhalb dieses Endes jedoch mit Nuten versehen ist, wobei das obere Ende der Buchse (17) unmittelbar an einem Kugellager (20) abgestützt ist, so daß die Welle (2) in der unteren Wandung (19) des Gestellteiles (1) abgestützt und gegen das Kugellager (20) zu verspannen ist.

2. Bodenbearbeitungsmaschine nach Anspruch 1,
dadurch gekennzeichnet, daß der Teil der Buchse (17), der in dem Gehäuse (18) des Lagers (20) angeordnet ist, mittels dessen die Welle (2) in der unteren Wandung (19) des Gestellteiles (1) gelagert ist, ringförmig ausgebildet ist.

3. Bodenbearbeitungsmaschine nach den Ansprüchen 1 oder 2,
dadurch gekennzeichnet, daß die Länge der Buchse (17) mindestens annähernd das Doppelte ihres Innendurchmessers beträgt.

4. Bodenbearbeitungsmaschine nach einem der vorhergehenden Ansprüche,
dadurch gekennzeichnet, daß eine Welle (2) von einer Öldichtung (29) umgeben ist, und daß der Halter (4) zum Haltern eines oder mehrerer Bodenbearbeitungselemente (5) zumindest teilweise zwischen dieser Öldichtung (29) und der Welle (2) angeordnet ist.

## Revendications

1. Machine pour le travail du sol ayant une partie de châssis (1) et des organes de travail du sol (3) supportés dans celle-ci et pouvant être entraînés autour d'arbres (2) dirigés vers le haut, chaque organe de travail du sol (3) portant sur son arbre (2) dirigé vers le haut un manchon (17) d'un support (4) apte à recevoir un ou plusieurs éléments de travail du sol (5), le manchon ayant une forme cylindrique, la partie cylindrique du manchon (17) étant apte à reposer sur une partie cylindrique de l'arbre (2),
**caractérisée** en ce que le manchon (17) est dépourvu de cannelures à son extrémité supérieure et qu'en dessous de cet endroit ladite extrémité supérieure est munie de cannelures, le manchon (17) étant adapté, à son extrémité supérieure, pour reposer directement sur un roulement à billes (20) au moyen duquel l'arbre (2) est supporté dans la paroi inférieure (19) de la partie de châssis (1), le manchon pouvant être serré contre ledit roulement à billes (20).

2. Machine pour le travail du sol selon la revendication 1, caractérisée en ce que la partie du manchon (17) qui est logée dans le boîtier (18) du roulement (20), au moyen duquel l'arbre (2) est supporté dans la paroi inférieure (19) de la partie de châssis (1), présente la forme d'un collet.

3. Machine pour le travail du sol selon la revendication 1 ou 2, caractérisée en ce que le manchon (17)a une longueur qui est, au moins approximativement, le double du diamètre intérieur du manchon (17).

4. Machine pour le travail du sol selon l'une quelconque des revendications précédentes, caractérisée en ce qu'un joint étanche à l'huile (29) est prévu autour d'un arbre (2)et en ce qu'une partie au moins du support (4) pour un ou plusieurs éléments de travail du sol (5) est situé entre ce joint étanche à l'huile (29) et l'arbre (2).
